# EUROPÄISCHE PATENTSCHRIFT

(11) **EP 1 268 953 B1**
(45) Veröffentlichungstag und Bekanntmachung des Hinweises auf die Patenterteilung: **05.07.2006**
(21) Anmeldenummer: 01927580.9
(22) Anmeldetag: 20.03.2001
(51) Int. Cl.: E04F 13/08, F21V 8/00

(54) **FUSSBODEN- ODER WANDBELAG AUS KERAMIK, HOLZ, KUNSTSTOFF, NATUR- ODER KUNSTSTEIN, SOWIE FLIESE ODER PANEELE HIERFÜR**
FLOOR OR WALL COVERING FROM CERAMICS, WOOD, PLASTIC, NATURAL OR ARTIFICIAL STONE, AND A TILE OR PANELS USED FOR THE SAME
REVETEMENT EN CERAMIQUE, BOIS, MATIERE PLASTIQUE, PIERRE NATURELLE OU ARTIFICIELLE POUR PLANCHER OU PAROI, ET CARREAUX OU PANNEAUX UTILISES A CET EFFET

(30) Priorität: 20.03.2000 DE 10013496
(43) Veröffentlichungstag der Anmeldung: 02.01.2003
(73) Patentinhaber: Hasecke, Guido, 99848 Sättelstädt (DE); Hasecke, Heinrich, 99848 Sättelstädt (DE)
(72) Erfinder: Hasecke, Guido, 99848 Sättelstädt (DE); Hasecke, Heinrich, 99848 Sättelstädt (DE)
(74) Vertreter: WALTHER, WALTHER & HINZ Patentanwälte - European Patent Attorneys
(86) Internationale Anmeldenummer: PCT/DE2001/001062
(87) Internationale Veröffentlichungsnummer: WO 2001/071122

(56) Entgegenhaltungen:
- DE-A- 3 730 893
- US-A- 5 095 412
- PATENT ABSTRACTS OF JAPAN vol. 015, no. 370 (M-1159), 18. September 1991 (1991-09-18) & JP 03 147970 A (NIPPON STEEL WELD PROD & ENG CO LTD), 24. Juni 1991 (1991-06-24)

## Beschreibung

Die vorliegende Erfindung betrifft einen Fußboden- oder Wandbelag aus Keramik, Holz, Kunststoff, Natur- oder Kunststein, mit über Lichtwellenleiter illuminierbaren Einlegern, sowie Fliesen und Paneele hierfür.

Neben dem besonderen ästethischen Eindruck schaffen derartige Fußboden- oder Wandbeläge auch zumindest eine gewisse Grundbeleuchtung in dem jeweiligen Zimmer und können daher ohne störend zu wirken als Notbeleuchtung und/oder Beleuchtung der Fluchtwege in öffentlichen Gebäuden eingesetzt werden. Aufgrund der Tatsache, dass die Illumination ohne direkten Strom erreicht wird, sind diese Beläge ideal für den Einsatz in Naßzellen.

Beispielsweise aus der DE 37 30 893 A1 ist ein Fußbodenbelag mit darin eingelassenen Einlegern bekannt, wobei im Einleger eingegossene Lichtwellenleiter diesen mit einer entfernten Lichtquelle verbinden und von Innen illumieren. Allerdings ist die Erstellung dieses Belages sehr kostspielig, da hierzu entweder die Länge und die Anordnung der einzusetzenden Lichtwellenleiters bekannt sein muß, was die Planung und die Produktion erschwert oder es müssen maximal Lange Lichtwellenleiter am Einleger angebracht werden, die anschließend vor Ort auf das gewünschte Maß abgelängt werden. Beides ist aufwändig und teuer. Alternativ könnte der Einleger auch vor Ort angefertigt werden, was noch komplizierter und teurer ist.

Aus den Patent Abstracts of Japan Volume 015, Nummer 370 (M-1159) & JP-A-03147970 ist eine Kunststofffliese bekannt, die eine Vielzahl von Aufnahmen aufweist. In jede dieser Aufnahmen ist ein Glasstein eingelassen, an dessen Unterseite jeweils ein Lichtwellenleiter angeschlossen ist, über den das Licht einer entfernt angeordneten Lichtquelle in den Glasstein gebracht wird, so dass dieser illuminiert. Dabei wird der Lichtwellenleiter zwischen der Fliese und dem Untergrund parallel zur Fliese geführt und im Bereich des betreffenden Glassteines im Winkel von 90° umgelenkt und senkrecht zur Unterseite in die Fliese eingeführt. Dort trifft der Lichtwellenleiter auf die Unterseite des Glassteines, sobald der Lichtwellenleiter aus der Fliese in die Aufnahme tritt.

Der Glasstein dieser Fliese wird nicht ausreichend illuminiert, so dass in der Fliese eine Vielzahl von Glassteinen vorgesehen werden, um genügend Helligkeit zu erzeugen. Um diese Vielzahl von Glassteinen zu illuminieren werden weiterhin sehr viele Lichtwellenleiter benötigt, so dass die Herstellungskosten einer solchen Fliese sehr hoch sind. Davon ausgehend liegt der vorliegenden Erfindung die Erkenntnis zugrunde, dass durch die starke Umlenkung des Lichtwellenleiters im Bereich des Glassteines hohe Leitungsverluste auftreten.

Davon ausgehend liegt der vorliegenden Erfindung die Aufgabe zugrunde einen durch Lichtwellenleiter illuminierten Fußboden- oder Wandbelag, sowie Fliesen und Paneele hierfür zu schaffen, der durch eine gute Lichtausbeute nur wenige Lichtwellenleiter benötigt, so dass die der Belag kostengünstig erstellt und installiert werden kann.

Als technische Lösung dieser Aufgabe wird erfindungsgemäß vorgeschlagen, den eingangs genannten Fußboden- oder Wandbelag durch eine Fliese oder Paneele weiterzubilden, die nach den Merkmalen des Anspruches 1 bzw. 2 ausgebildet ist.

Eine nach dieser technischen Lehre ausgebildete Fliese oder Paneel hat den Vorteil, dass der Einleger und der Lichtwellenleiter unabhängig voneinander hergestellt werden kann und dass diese erst bei der Erstellung des Gesamtbelages vor Ort zusammengeführt werden. So kann der Einleger und/oder die Fliese bzw. das Paneel entsprechend den Kundenwünschen bereits werksseitig vorgefertigt werden, während der Lichtwellenleiter bei der Erstellung des Belages vor Ort maßgenau abgelängt hinzugefügt wird, was zu einer Materialersparnis und einer Arbeitserleichterung führt und somit die Kosten zur Schaffung dieses Belages senkt.

Erfindungsgemäß ist auf einer Unterseite der Fliese oder der Paneele eine Aufnahme zur Aufnahme eines freien Endes des Lichtwellenleiters angeordnet, wobei eine Seite der Aufnahme in die Aussparung mündet. Dies hat den Vorteil, dass das freie Ende des Lichtwellenleiters geschützt in der Aufnahme Platz findet und vor allem, dass das freie Ende des Lichtwellenleiters gezielt an die Schmalseite des Einlegers herangeführt wird, um einen bestmöglichen Lichteintritt in den Einleger zu gewährleisten.

Eine weitere Verbesserung des Lichteintritts in den Einleger wird erfindungsgemäß dadurch erreicht, dass ein dem Einleger zugewandter Teil der Aufnahme parallel zur Unterseite ausgerichtet ist, während die Aufnahme ansonsten schräg angeordnet ist, so dass eine andere Seite der Aufnahme in die Unterseite der Fliese oder Paneele mündet.

In einer bevorzugten Ausführungsform ist der Lichtwellenleiter an einer Ecke des Einlegers angebracht. Dies hat den Vorteil, das sich hierdurch das in den Einleger eingeleitete Licht gleichmäßig im Einleger verteilt und eine gute Ausleuchtung bewirkt.

In noch einer anderen, bevorzugten Ausführungsform ist der Einleger und/oder Lichtwellenleiter in dem sich berührenden Bereich poliert. Hierdurch wird eine gute Übertragung des Lichtes vom Lichtwellenleiter in den Einleger erreicht.

In wieder einer anderen, bevorzugten Ausführungsform sind mehrere Lichtwellenleiter zu einem Bündel zusammengefasst. Dieses Bündel kann vorteilhafterweise in einer rückseitig in den Fußboden- oder Wandbelag eingebrachten Nut geführt sein. Dies hat den Vorteil, dass das Bündel im Belag aufgenommen ist, ohne dass das Bündel hervorsteht. So ist eine ordnungsgemäße Verlegung des Belages und des Bündels gewährleistet.

In einer weiteren, bevorzugten Ausführungsform ist der Einleger aus Glas, Acryl, PVC oder einem anderen Kunststoff gebildet, wobei die Rückseite vorzugsweise rauh oder unbehandelt und die Vorderseite vorzugsweise glatt oder poliert ausgebildet ist. Durch die glatte oder polierte Ausbildung der Vorderseite kann das eingeführte Licht gut sichtbar und verlustarm aus dem Einleger heraustreten, während auf der Rückseite des Einlegers auftreffende Lichtstrahlen zur Vorderseite hin reflektiert werden, so dass beim Betrachter der Eindruck einer großen Tiefe erzeugt wird.

In einer bevorzugten Weiterbildung ist der Einleger rückseitig mit einer farbgebenden Schicht, vorzugsweise mit einer aufgedampften Goldschicht oder einer auflackierten oder aufgeklebten Farbschicht versehen. Hierdurch werden die auf die Rückseite auftreffenden Lichtstrahlen in der jeweiligen Farbe reflektiert, so dass der Betrachter den Einleger in der entsprechenden Farbe sieht. Hierdurch werden farbige Einleger geschaffen.

In noch einer bevorzugten Weiterbildung ist dieses Motiv als Notfallbeleuchtung, beispielsweise unter Darstellung von Pfeilen oder dergleichen ausgebildet, um im Gebäude befindliche Personen zum Notausgang zu leiten. Diese Notfallbeleuchtung ist kostengünstig herstellbar, einfach zu warten (da zentral zugänglich) und verbraucht nur wenig Strom, da die gesamte Notfallbeleuchtung mit einer einzigen Leuchtquelle versorgt werden kann.

Weitere Vorteile der erfindungsgemäßen Fliese bzw. des erfindungsgemäßen Paneels und des erfindungsgemäßen Belages ergeben sich aus der beigefügten Zeichnung und den nachfolgend beschriebenen Ausführungsformen. Die erwähnten Ausführungsformen sind nicht als abschließende Aufzählung zu verstehen, sondern haben vielmehr beispielhaften Charakter. Es zeigen:
- Fig. 1: eine Explosionsdarstellung einer Fliese zur Erstellung eines erfindungsgemäßen Fußboden- oder Wandbelages;
- Fig. 2: eine Seitenansicht der Fliese gemäß Fig. 1, geschnitten entlang Linie II-II in Fig. 1;
- Fig. 3a: eine Seitenansicht der Hülse;
- Fig. 3b: eine Draufsicht auf die Hülse gemäß Fig. 3a;
- Fig. 4: eine Vorderansicht eines erfindungsgemäßen Fußboden- oder Wandbelages;
- Fig. 5: eine Rückansicht des Belages gemäß Fig. 4;
- Fig. 6: eine Rückansicht einer Fliese des Belages gemäß Fig. 4 in vergrößerter Darstellung;
- Fig. 7a: eine Seitenansicht in zweiter Ausführungsform der Hülse;
- Fig. 7b: eine Draufsicht auf die Hülse gemäß Fig. 7a.

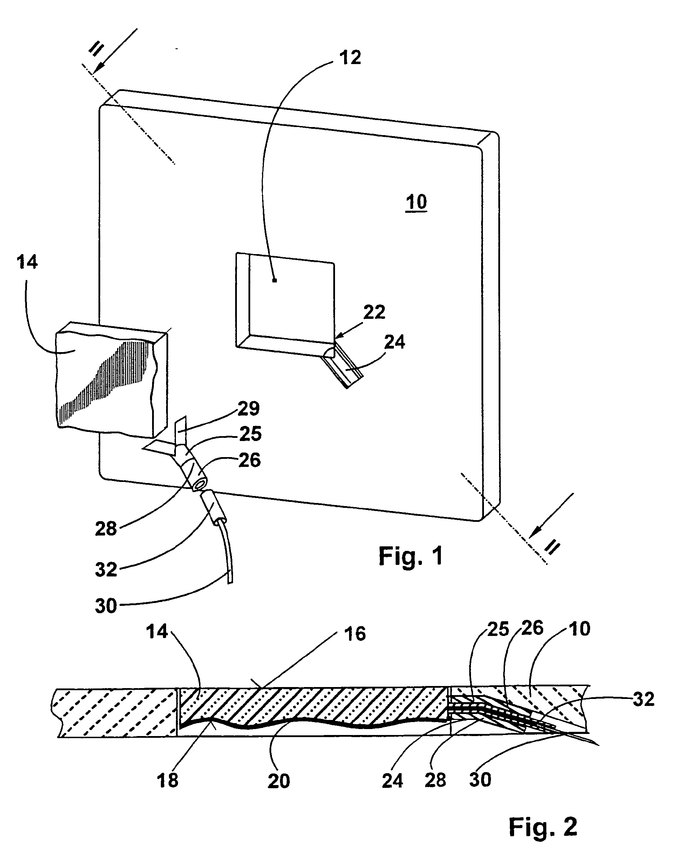

In den Figuren 1 und 2 ist eine Fliese 10 aus Keramik, Kunststoff, Natur- oder Kunststein dargestellt, die eine quadratische Aussparung 12 zur Aufnahme eines quadratischen Einlegers 14 aus Glas besitzt. Dabei wird der Einleger 14 vorzugsweise mit Epoxydharz in die Fliese 10 eingeklebt. Dieser Einleger 14 ist auf seiner Frontseite 16 poliert und auf seiner Rückseite 18 unbehandelt. Außerdem ist auf der Rückseite 18 eine Schicht 20 aus Gold aufgedampft, um dem Licht einen leicht goldenen Farbton zu verleihen.

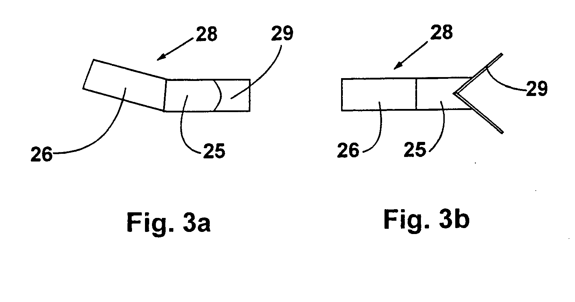

An der Unterseite der Fliese 10 ist am Rande der Aussparung 12 in einer Ecke 22 in diagonaler Richtung eine Aufnahme 24 eingelassen, deren eine Stirnseite zur Aussparung 12 hin mündet, während eine andere Stirnseite in die Unterseite der Fliese 10 mündet. In diese Aufnahme 24 ist eine entsprechend geformte Hülse 28 einsetzbar, welche das freie Ende eines Lichtwellenleiters 30 fixiert und in der ordnungsgemäßen Position hält. Dabei sind Aufnahme 24 und Hülse 28 gleichermaßen geknickt ausgebildet, wie im Detail den Figuren 3a und 3b zu entnehmen ist, so dass ein erster Abschnitt 25 parallel zur Unterseite der Fliese 10 ausgerichtet ist, während ein zweiter Abschnitt 26 schräg ausgerichtet ist. Folglich mündet der erste Abschnitt 25 zum Einleger 14 hin in die Aussparung 12 und der zweite Abschnitt 26 in die Unterseite der Fliese 10.

An der Hülse 28 ist einlegerseitig ein Führungselement 29 angeordnet, welches im Querschnitt V-förmig ausgebildet ist. Mit diesem Führungselement 29 ist die Hülse 28 passgenau an eine Ecke des Einlegers 14 anlegbar, so dass der in der Hülse 28 gehaltene Lichtwellenleiter 30 so nah wie möglich an den Einleger 14 herangeführt werden kann und in dieser Position zuverlässig gehalten wird.

Die Oberfläche desjenigen Bereiches der Schmalseite des Einlegers 14, an der der Lichtwellenleiter 30 zur Anlage kommt, ist poliert, um einen guten Übergang des Lichtes zu gewährleisten.

Das freie Ende des Lichtwellenleiters 30 ist zu seinem Schutz mit einer Hülse 32 versehen, die passgenau in die Hülse 28 einführbar ist und in dieser klemmend gehalten wird. Zur besseren Übertragung des Lichtes ist das freie Ende des Lichtwellenleiters 30 poliert.

In zusammengebautem Zustand wird das Licht einer hier nicht dargestellten Lichtquelle über den Lichtwellenleiter 30 in den Einleger 14 geleitet und verteilt sich dort. Dabei werden auf die Rückseite 18 des Einlegers 14 auftreffende Lichtstrahlen von der goldbedampften Schicht 20 goldfarben reflektiert und treten zusammen mit anderen Lichtstrahlen durch die polierte oberfläche der Frontseite 16 nach Außen. Hierdurch erscheint einem Betrachter der beleuchtete Einleger 14 nicht in kaltem weiß, sondern in einem leicht goldenen Farbton.

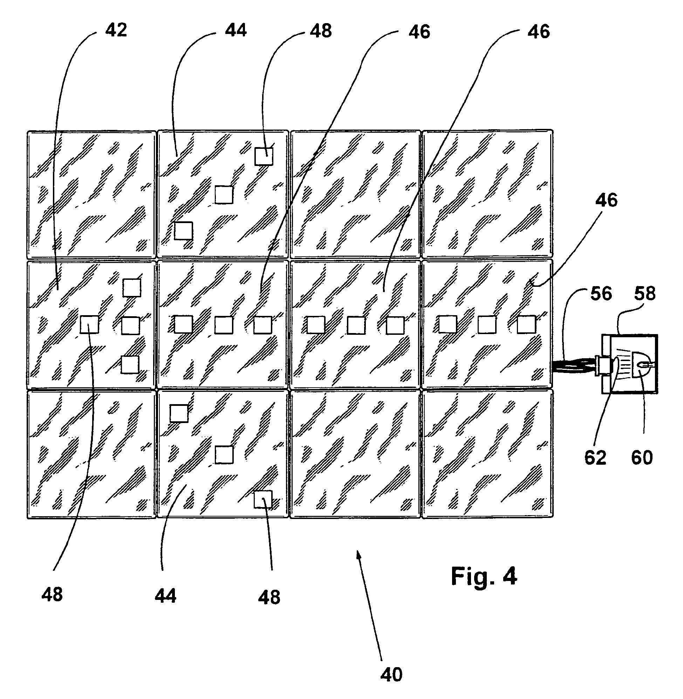

In den Figuren 4 bis 6 ist ein Belag 40 für Fußböden oder Wände gezeigt, der sich aus mehreren Fliesen 42, 44, 46 zusammensetzt. Es versteht sich, dass diese Fliesen 42, 44, 46 technisch analog den Fliesen 10 gemäß den Figuren 1 und 2 aufgebaut sind. Es versteht sich, dass die äußere Form des Einlegers und die Anzahl und die Anordnung der eingesetzen Einleger je nach gewünschtem Motiv variiert werden können.

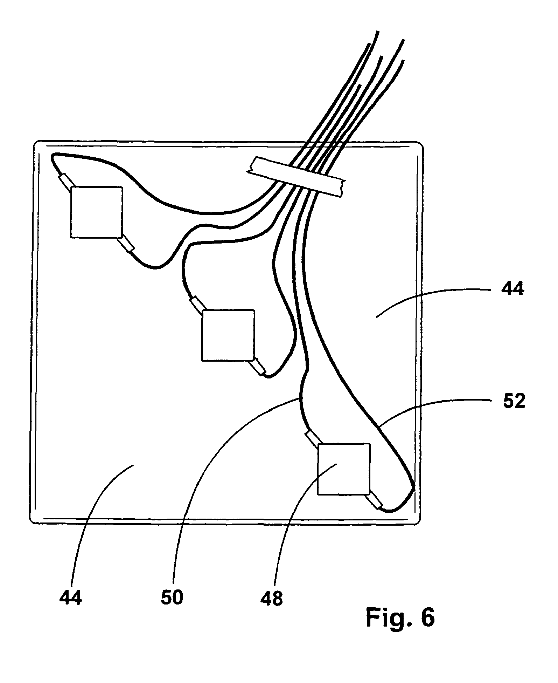

In den Belag 40 sind verschiedene Fliesen 42, 44, 46 mit jeweils unterschiedlich angeordneten Einlegern 48 derart eingearbeitet, dass die Einleger 48 in ihrer Gesamtheit einen Pfeil darstellen. Wie insbesondere Fig. 6 zu entnehmen ist, sind an jeden Einleger 48 zwei Lichtwellenleiter 50, 52 angeschlossen, um eine sehr gute Ausleuchtung zu erreichen. Alle Lichtwellenleiter 50, 52 sind dann zu einer zentralen, rückseitig in der Fliese 46 eingearbeiteten Nut 54 geführt und dort zu einem Bündel 56 vereint. Zum Schutz der Lichtwellenleiter 50, 52 ist das Bündel 56 mit einer hier nicht dargestellten Spiralmetallmantel-Schutzhülle versehen.

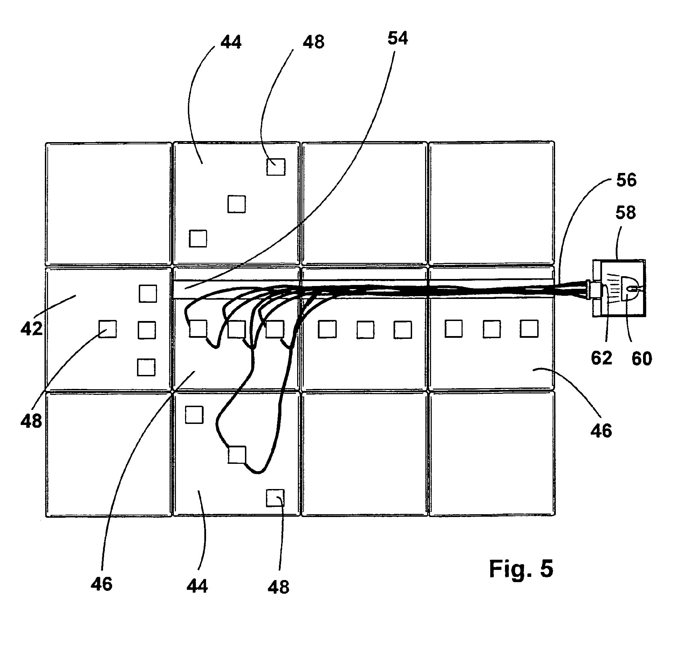

In Fig. 5 sind aus zeichentechnischen Gründen, insbesondere um die Übersichtlichkeit zu erhalten, nur einige Lichtwellenleiter bis zum Einleger gezeichnet. Selbstverständlich sind alle Einleger mit zwei Lichtwellenleitern verbunden, auch wenn dies nicht explizit dargestellt ist.

Das Bündel 56 ist dann über eine nahezu beliebige Entfernung zu einem Lichtkasten 58 geführt, in dem sich eine Lichtquelle 60, vorzugsweise eine Niederspannung-Halogenlampe, befindet. Das Ende 62 des Bündels 56 ist glatt abgeschnitten und poliert, um das gewünschte Licht gut aufnehmen zu können. In einem bestimmten Abstand zum Ende 62 des Bündels 56 ist die Lichtquelle 60 derart angeordnet, dass das Licht möglichst senkrecht auf das Ende 62 auftrifft, so dass das Licht möglichst verlustfrei bis zum Einleger 48 geführt wird.

Es versteht sich, dass in anderen Ausführungsformen sowohl der Einleger ein beliebige andere Form annehmen kann, als auch dass mehrere Einleger zusammen ein anderes Motiv darstellen können. Der künstlerischen Freiheit des Designers sind dabei keine Grenzen gesetzt.

Es versteht sich ebenfalls, derartige Beläge auch in Holzvertäfelungen, Linoleum, Parkett oder ander Holzfußböden einarbeiten läßt.

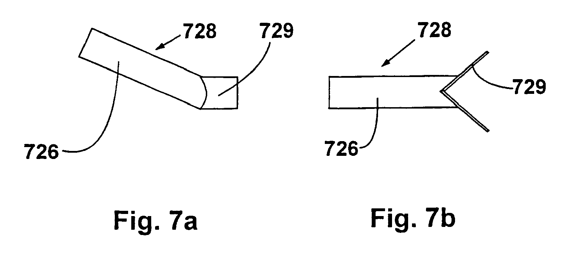

In den Figuren 7a und 7b ist eine alternative Ausführungsform der Hülse 28 gemäß Figuren 3a und 3b gezeigt, die im Gegensatz zur Hülse 28 nicht geknickt, sondern geradlinig ausgeführt ist. Die Hülse 728 umfasst einen geradlinigen, hohlzylindrischen Abschnitt 726, an dem ein Führungselement 729 angebracht ist. Dabei ist das Führungselement 729 leicht schräg an dem Abschnitt 726 angebracht, so dass das Führungselement 729 formbündig am Einleger anliegt, und so dass der Abschnitt 726 entsprechend schräg in die Aufnahme an der Unterseite der Fliese einsetzbar ist. Es versteht sich, dass die Aufnahme wahlweise -wie in Fig. 2 dargestellt- geknickt, oder aber entsprechend der Hülse 728 geradlinig ausgeführt sein kann.

### Bezugszeichenliste:

- 10: Fliese
- 12: Aussparung
- 14: Einleger
- 16: Frontseite
- 18: Rückseite
- 20: Schicht
- 22: Ecke
- 24: Aufnahme
- 25: Abschnitt
- 26,726: Abschnitt
- 28,728: Hülse
- 29,729: Führungselement
- 30: Lichtwellenleiter
- 32: Hülse
- 40: Belag
- 42: Fliese
- 44: Fliese
- 46: Fliese
- 48: Einleger
- 50: Lichtwellenleiter
- 52: Lichtwellenleiter
- 54: Nut
- 56: Bündel
- 58: Lichtkasten
- 60: Lichtquelle
- 62: Ende

## Patentansprüche

1. Boden- oder Wandfliese (10) aus Keramik, Natur- oder Kunststein, mit mindestens einer Aussparung (12), in welche ein beleuchtbarer, aus einem transparenten Material oder aus einem diffus abstrahlenden Lichtleitkörper gebildeter Einleger (14, 48) eingelegt ist, wobei außen am Einleger (14, 48) ein Lichtwellenleiter (30, 50, 52) angreift, der den Einleger (14, 48) mit einer entfernt angeordneten Lichtquelle (60) verbindet, wobei auf einer Unterseite der Fliese (10) eine Aufnahme (24) zur Aufnahme eines freien Endes des Lichtwellenleiters (30) angeordnet ist, die in die Aussparung (12) mündet,
**dadurch gekennzeichnet,**
**dass** ein dem Einleger zugewandter Abschnitt (25) der Aufnahme (24) parallel zur Unterseite ausgerichtet ist, so dass der Lichtwellenleiter (30, 50, 52) an einer Schmalseite des Einlegers (14, 48) angreift, und dass ein zweiter Abschnitt (26) der Aufnahme (24) schräg angeordnet ist, so dass eine andere Seite der Aufnahme (24) in die Unterseite der Fliese (10) mündet.

2. Paneel (10) aus Holz oder Kunststoff, mit mindestens einer Aussparung (12), in welche ein beleuchtbarer, aus einem transparenten Material oder aus einem diffus abstrahlenden Lichtleitkörper gebildeter Einleger (14, 48) eingelegt ist, wobei außen am Einleger (14, 48) ein Lichtwellenleiter (30, 50, 52) angreift, der den Einleger (14, 48) mit einer entfernt angeordneten Lichtquelle (60) verbindet, wobei auf einer Unterseite der Paneele eine Aufnahme (24) zur Aufnahme eines freien Endes des Lichtwellenleiters (30) angeordnet ist, die in die Aussparung (12) mündet,
**dadurch gekennzeichnet,**
**dass** ein dem Einleger zugewandter Abschnitt (25) der Aufnahme (24) parallel zur Unterseite ausgerichtet ist, so dass der Lichtwellenleiter (30, 50, 52) an einer Schmalseite des Einlegers (14, 48) angreift,
und **dass** ein zweiter Abschnitt (26) der Aufnahme (24) schräg angeordnet ist, so dass eine andere Seite der Aufnahme (24) in die Unterseite des Paneels mündet.

3. Fliese nach Anspruch 1 oder Paneel nach Anspruch 2,
**dadurch gekennzeichnet,**
**dass** in der Fliese oder im Paneel rückseitig eine Nut (54) zur Aufnahme eines Bündels (56) aus Lichtwellenleitern (30, 50, 52) ausgebildet ist.

4. Fliese oder Paneel nach einem der voranstehenden Ansprüche,
**dadurch gekennzeichnet,**
**dass** der Lichtwellenleiter (30) an einer Ecke (22) des Einlegers (14) angreift.

5. Fliese oder Paneel nach einem der vorangehenden Ansprüche,
**dadurch gekennzeichnet,**
**dass** der Einleger (14) und/oder der Lichtwellenleiter (30) in dem sich berührenden Bereich poliert ist/sind.

6. Fliese oder Paneel nach einem der vorangehenden Ansprüche,
**dadurch gekennzeichnet,**
**dass** der Einleger (14, 48) rückseitig rauh oder unbehandelt ist.

7. Fliese oder Paneel nach einem der vorangehenden Ansprüche,
**dadurch gekennzeichnet,**
**dass** der Einleger (14, 48) vorderseitig glatt oder poliert ist.

8. Fliese oder Paneel nach einem der vorangehenden Ansprüche,
**dadurch gekennzeichnet,**
**dass** der Einleger (14) rückseitig mit einer farbgebenden Schicht (20) versehen ist.

9. Fliese oder Paneel nach dem Anspruch 8,
**dadurch gekennzeichnet,**
**dass** die farbgebende Schicht (20) eine aufgedampfte Goldschicht ist.

10. Fliese oder Paneel nach einem der Ansprüche 8 oder 9,
**dadurch gekennzeichnet,**
**dass** die farbgebende Schicht eine auflackierte oder aufgeklebte Farbschicht ist.

11. Fußboden- oder Wandbelag aus Keramik, Holz, Kunststoff, Natur- oder Kunststein, mit über Lichtwellenleiter illuminierbaren Einlegern,
**dadurch gekennzeichnet,**
**dass** der Belag mindestens eine Fliese und/oder mindestens ein Paneel umfasst, welche nach einem der vorangehenden Ansprüche ausgebildet ist.

12. Belag nach Anspruch 11,
**dadurch gekennzeichnet,**
**dass** mehrere Lichtwellenleiter (50, 52) zu einem Bündel (56) zusammengefasst sind und zu einer zentralen Lichtquelle (60) führen.

## Claims

1. A floor or wall tile (10) made of ceramics, natural or artificial stone, with at least one recess (12) into which an illuminatable inlay (14, 48) made of a transparent material or of a diffuse reflecting fibre optic element is inserted, an optical waveguide (30, 50, 52) connecting said inlay (14, 48) to a remote light source (60) being mounted on the exterior of the inlay (14, 48), a location (24) for receiving a free end of the optical waveguide (30) being arranged on an underside of the tile (10) leading into the recess (12),
**characterized in that**
a section (25) of the location (24) facing the inlay is oriented parallel to the underside so that the optical waveguide (30, 50, 52) is mounted to a small side of the inlay (14, 48) and that a second section (26) of the location (24) is arranged diagonally so that another side of the location (24) opens into the underside of the tile (10).

2. A panel (10) made of wood or plastic material, with at least one recess (12) into which an illuminatable inlay (14, 48) made of a transparent material or of a diffuse reflecting fibre optic element is inserted, an optical waveguide (30, 50, 52) connecting said inlay (14, 48) to a remote light source (60) being mounted on the exterior of the inlay (14, 48), a location (24) for receiving a free end of the optical waveguide (30) being arranged on an underside of the panels and opening into the recess (12),
**characterized in that**
a section (25) of the location (24) facing the inlay is oriented parallel to the underside so that the optical waveguide (30, 50, 52) is mounted to a small side of the inlay (14, 48) and that a second section (26) of the location (24) is arranged diagonally so that another side of the location (24) leads into the underside of the panel.

3. The tile according to claim 1 or the panel according to claim 2,
**characterized in that**
a groove (54) for receiving a beam (56) of optical waveguides (30, 50, 52) is configured on the rear side of the tile or of the panel.

4. The tile or panel according to one of the afore mentioned claims,
**characterized in that**
the optical waveguide (30) is mounted on a corner (22) of the inlay (14).

5. The tile or panel according to one of the afore mentioned claims,
**characterized in that**
the inlay (14) and/or the optical waveguide (30) is/are polished in the contact region.

6. The tile or panel according to one of the afore mentioned claims,
**characterized in that**
the rear side of the inlay (14, 48) is rough or untreated.

7. The tile or panel according to one of the afore mentioned claims,
**characterized in that**
the front side of the inlay (14, 48) is smooth or polished.

8. The tile or panel according to one of the afore mentioned claims,
**characterized in that**
the rear side of the inlay (14) is provided with a colouring layer (20).

9. The tile or panel according to claim 8,
**characterized in that**
the colouring layer (20) is a vapour-deposited layer of gold.

10. The tile or panel according to one of the claims 8 or 9,
**characterized in that**
the colouring layer is a colour layer that is either varnished or bonded.

11. A floor or wall covering from ceramics, wood, plastic, natural or artificial stone with inlays that are illuminatable by means of optical waveguides,
**characterized in that**
the covering comprises at least one tile and/or at least one panel configured according to one of the afore mentioned claims.

12. The covering according to claim 11,
**characterized in that**
several optical waveguides (50, 52) are combined into a beam (56) and lead to a central light source (60).

## Revendications

1. Revêtement sol ou mur (10) en céramique, en pierre naturelle ou artificielle, avec au moins une découpe (12) dans laquelle est placée une incrustation (14, 48) apte à être éclairée et réalisée en un matériau transparent ou par un corps conducteur de lumière à rayonnement diffus, une fibre optique (30, 50, 52) reliant l'incrustation (14, 48) à une source lumineuse (60) disposée à distance étant montée sur l'extérieur de l'incrustation (14, 48), un logement (24) destiné à recevoir une extrémité libre de la fibre optique (30) et débouchant dans la découpe (12) étant disposé sur une face inférieure du carreau (10),
**caractérisé en ce**
**qu'**une portion (25) du logement (24) tournée vers l'incrustation est orientée parallèlement à la face inférieure de telle sorte que la fibre optique (30, 50, 52) est montée sur un petit côté de l'incrustation (14, 48) et qu'une deuxième portion (26) du logement (24) est disposée de biais de sorte qu'un autre côté du logement (24) débouche dans la face inférieure du carreau (10).

2. Panneau (10) en bois ou en matière plastique, avec au moins une découpe (12) dans laquelle est placée une incrustation (14, 48) apte à être éclairée et réalisée en un matériau transparent ou par un corps conducteur de lumière à rayonnement diffus, une fibre optique (30, 50, 52) reliant l'incrustation (14, 48) à une source lumineuse (60) disposée à distance étant montée sur l'extérieur de l'incrustation (14, 48), un logement (24) destiné à recevoir une extrémité libre de la fibre optique (30) et débouchant dans la découpe (12) étant disposé sur une face inférieure des panneaux,
**caractérisé en ce**
**qu'**une portion (25) du logement (24) tournée vers l'incrustation est orientée parallèlement à la face inférieure de telle sorte que la fibre optique (30, 50, 52) est attachée sur un petit côté de l'incrustation (14, 48) et qu'une deuxième portion (26) du logement (24) est disposée de biais de sorte qu'un autre côté du logement (24) débouche dans la face inférieure du panneau.

3. Carreau selon la revendication 1 ou panneau selon la revendication 2,
**caractérisé en ce**
**qu'**une rainure (54) destinée à recevoir un faisceau (56) de fibres optiques (30, 50, 52) est ménagée dans la face arrière du carreau ou du panneau.

4. Carreau ou panneau selon l'une quelconque des revendications précédentes,
**caractérisé en ce**
**que** la fibre optique (30) est montée dans un coin (22) de l'incrustation (14).

5. Carreau ou panneau selon l'une quelconque des revendications précédentes,
**caractérisé en ce**
**que** l'incrustation (14) et/ou la fibre optique (30) est/sont polies dans leur zone de contact.

6. Carreau ou panneau selon l'une quelconque des revendications précédentes,
**caractérisé en ce**
**que**, sur sa face arrière, l'incrustation (14, 48) est rugueuse ou non traitée.

7. Carreau ou panneau selon l'une quelconque des revendications précédentes,
**caractérisé en ce**
**que**, sur sa face avant, l'incrustation (14, 48) est lisse ou polie.

8. Carreau ou panneau selon l'une quelconque des revendications précédentes,
**caractérisé en ce**
**que**, sur sa face arrière, l'incrustation (14) est munie d'une couche colorante (20).

9. Carreau ou panneau selon la revendication 8,
**caractérisé en ce**
**que** la couche colorante (20) est une couche d'or déposée par vaporisation.

10. Carreau ou panneau selon l'une quelconque des revendications 8 ou 9,
**caractérisé en ce**
**que** la couche colorante est une couche couleur de peinture ou une couche couleur collée.

11. Revêtement sol ou mur en céramique, en bois, en matière plastique, en pierre naturelle ou artificielle, avec des incrustations aptes à être illuminées par des fibres optiques,
**caractérisé en ce**
**que** le revêtement comprend au moins un carreau et/ou au moins un panneau formé selon l'une quelconque des revendications précédentes.

12. Revêtement selon la revendication 11,
**caractérisé en ce**
**que** plusieurs fibres optiques (50, 52) sont rassemblées en un faisceau (56) et mènent à une source lumineuse (60) centrale.
